# FASCICULE DE BREVET EUROPEEN

(11) **EP 0 515 250 B1**
(45) Date de publication et mention de la délivrance du brevet: **28.09.1994**
(21) Numéro de dépôt: 92401327.9
(22) Date de dépôt: 14.05.1992
(51) Int. Cl.: F02B 29/04, F01P 7/16

(54) **Dispositif de refroidissement de l'air de suralimentation d'un moteur à combustion interne d'un véhicule**
Vorrichtung zur Kühlung der Ladeluft einer Brennkraftmaschine
Device for cooling the charge air for an internal combustion engine

(30) Priorité: 23.05.1991 FR 9106233
(43) Date de publication de la demande: 25.11.1992
(73) Titulaire: AUTOMOBILES PEUGEOT, 75116 Paris (FR); AUTOMOBILES CITROEN, 92200 Neuilly-sur-Seine (FR)
(72) Inventeur: Thimel, Benoît, F-25490 Dampierre les Bois (FR)
(74) Mandataire: Thinat, Michel

(56) Documents cités:
- EP-A- 0 352 158
- DE-A- 2 014 169
- DE-C- 734 533
- PATENT ABSTRACTS OF JAPAN vol. 8, no. 274 (M-345)(1711) 14 Décembre 1984

## Description

La présente invention concerne un dispositif de refroidissement de l'air de suralimentation d'un moteur à combustion interne d'un véhicule automobile.

Le refroidissement de l'air de suralimentation des moteurs turbocompressés s'effectue habituellement par l'intermédiaire d'un échangeur air-air placé en façade devant le radiateur principal d'eau de refroidissement, ou au dessus du moteur, ou dans un passage de roue.

Cependant, ces solutions connues ont pour inconvénient majeur soit d'entraîner des pertes de charge sur l'air d'admission du moteur, soit d'avoir une faible efficacité en refroidissement de l'air de suralimentation.

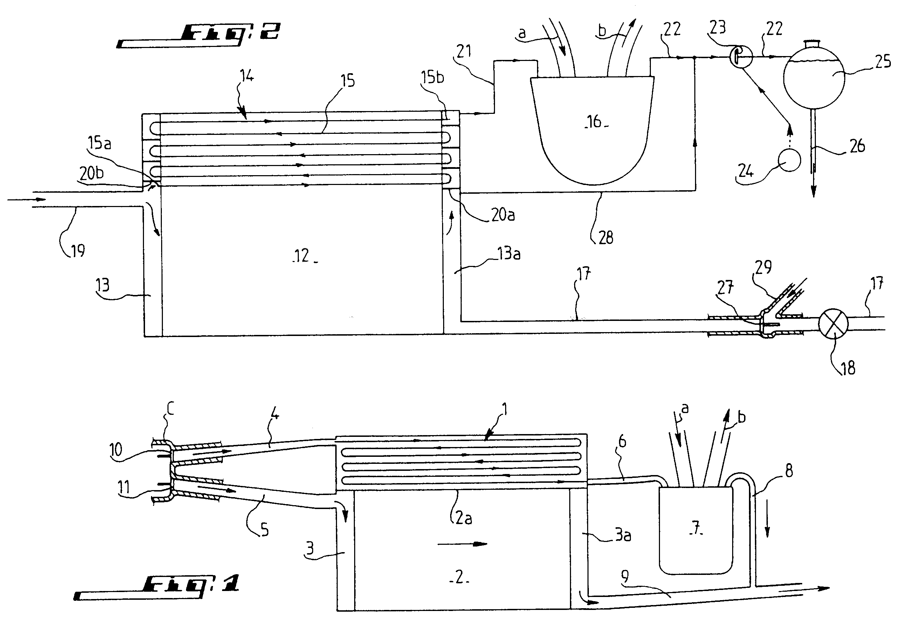

On connaît également un dispositif de refroidissement de l'air de suralimentation du genre représenté à la figure 1. Cette solution connue consiste à refroidir l'air de suralimentation au moyen d'un échangeur air-eau de faible perte de charge solidaire du moteur, l'eau de cet échangeur étant préalablement refroidie dans un échangeur spécifique dit "basse température", généralement constitué d'un serpentin permettant d'obtenir un faible débit mais une différence de températures importante.

Comme représenté en figure 1, l'échangeur basse température 1 est intégré au radiateur principal 2 au-dessus de ce dernier. Le radiateur 2 comprend, comme cela est connu en soi, un faisceau de tubes (non représenté) aux extrémités duquel sont montées deux boîtes à eau 3, 3a. L'entrée supérieure du serpentin de l'échangeur 1 est raccordée à une conduite 4 elle-même raccordée à la sortie de la culasse C du moteur. La boîte à eau 3 du radiateur 2, séparé de l'échangeur 1 par sa paroi supérieure 2a, est raccordée à sa partie supérieure à une conduite 5 elle-même raccordée à la culasse C. La sortie inférieure du serpentin de l'échangeur 1 est raccordée par une conduite 6 à l'échangeur air-eau 7 constituant le refroidisseur d'air de suralimentation, dont l'arrivée et la sortie dans et de l'échangeur 7 sont symbolisés respectivement par les flèches a et b. L'échangeur 7 est ainsi placé entre le compresseur de l'ensemble turbocompresseur du moteur et le collecteur d'air d'admission du moteur. La sortie de l'échangeur 7 est raccordée par une conduite 8 à une canalisation principale 9 conduisant l'eau refroidie sortant du radiateur 2 vers le moteur, la canalisation 9 étant raccordée à la boîte à eau 3a en bas de celle-ci. La circulation de l'eau dans les conduites 4 et 5 est commandée par deux vannes thermostatiques indépendantes 10 et 11 disposées respectivement dans les conduites 4 et 5 au niveau de leurs entrées respectives. La vanne 11 est réglée de façon à s'ouvrir au-dessus d'une température prédéterminée de l'eau chaude sortant de la culasse. Cette température prédéterminée est en générale supérieure à 80°C et peut être fixée par exemple à 88°C. La vanne 10 est réglée de façon à s'ouvrir à une température inférieure à la température d'ouverture de la vanne 11. La température d'ouverture de la vanne 10 est en générale inférieure d'au moins 5°C à la température d'ouverture de la vanne 11. Ainsi, la circulation de l'eau dans l'échangeur 1 et l'échangeur 7 est maximale même quand la vanne principale 11 n'est qu'entrouverte. Entre la température d'ouverture de la vanne 10 et la température de la vanne 11, l'eau ne circule que dans l'échangeur basse température 1. Ce dernier est donc chaud alors que le radiateur principal 2 est encore froid. Or, de telles différences de températures sont insupportables car les dilatations différentielles résultantes sont trop importantes et occasionnent des dommages par rupture au radiateur principal 2.

EP-A-352 158 décrit un dispositif d'échangeur de chaleur pour plusieurs circuits de refroidissement comprenant les caractéristiques énoncées dans le préambule de la revendication 1.

Cependant, la différence de température dans les circuits n'est obtenue que par une différence de débit, la circulation du fluide dans ceux-ci étant commandée par une seule vanne thermostatique disposée, comme on le voit sur la figure 6, entre la sortie du moteur et l'entrée (34) du radiateur. Il s'agit donc, de ce point de vue, d'une disposition qui ne permet pas d'obtenir une circulation progressive et différenciée du fluide dans les deux circuits, ni un remplissage permanent du radiateur (12).

L'invention a pour but d'éliminer les inconvénients ci-dessus des dispositifs connus en proposant un dispositif de refroidissement d'air de suralimentation d'un moteur à combustion interne permettant notamment de réchauffer les tubes du radiateur principal les plus proches de l'échangeur basse température dès que ce dernier est alimenté en eau chaude.

A cet effet, le dispositif de refroidissement de l'air de suralimentation d'un moteur à combustion interne d'un véhicule conforme à l'invention, comprend les caractéristiques définies dans la revendication 1.

Selon un mode de réalisation, la conduite d'amenée débouche également directement dans l'entrée basse de l'échangeur basse température.

Le dispositif comprend également une conduite supplémentaire de sortie du radiateur principal en haut de la boîte à eau de celui-ci et raccordée à la conduite de sortie de l'échangeur air-eau en amont de la seconde vanne thermostatique de façon que les bulles de gaz contenues dans le radiateur se concentrant en haut de celui-ci soient entraînées par la circulation d'eau lorsque la première vanne thermostatique est fermée et la seconde vanne thermostatique s'ouvre.

Selon un autre mode de réalisation, l'entrée basse de l'échangeur basse température communique avec la partie haute de la boîte à eau de sortie du radiateur.

La canalisation principale comporte au niveau de sa partie de raccordement au radiateur un étranglement ou rétreint.

Selon une autre caractéristique, le dispositif comprend une boîte de dégazage reliée à la conduite de sortie de l'échangeur air-eau en aval de la seconde vanne thermostatique et dont la sortie est raccordée à la canalisation principale précitée en aval de la première vanne thermostatique.

La première température précitée est supérieure à 80°C et est de préférence d'environ 85°C tandis que la seconde température est inférieure d'au moins 5°C à la première température et est de préférence d'environ 80°C.

Avantageusement, la seconde vanne thermostatique est commandée à partir de l'information de température d'eau de la culasse du moteur.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels :
La figure 1 représente schématiquement un dispositif connu de refroidissement d'air de suralimentation d'un moteur turbocompressé.
La figure 2 représente schématiquement un mode de réalisation du dispositif de refroidissement d'air de suralimentation conforme à l'invention.
La figure 3 représente schématiquement un autre mode de réalisation du dispositif de l'invention.

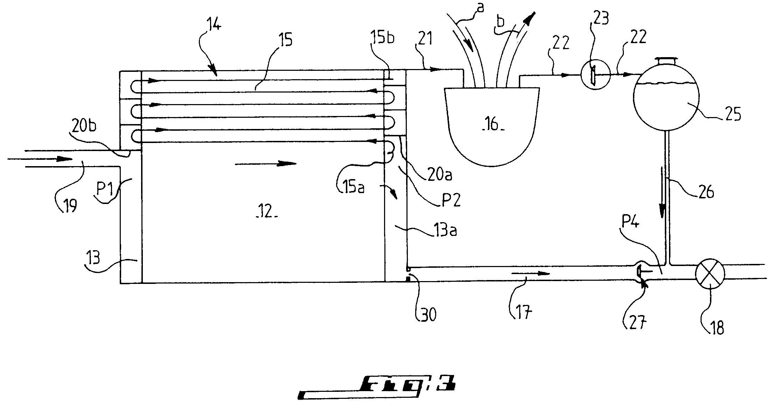

En se reportant à la figure 2, le dispositif de refroidissement d'air de suralimentation d'un moteur turbocompressé d'un véhicule automobile comprend un radiateur principal 12 comportant de façon classique un faisceau de tubes (non représenté) aux extrémités duquel sont montées deux boîtes à eau 13 et 13a. Un échangeur basse température 14 est intégré au radiateur principal 12 à la partie supérieure de ce dernier. L'échangeur 14 est constitué d'un serpentin 15 permettant d'obtenir un faible débit d'eau et une différence de températures importante de façon à préalablement refroidir l'eau provenant de la culasse (non représentée) du moteur. Le dispositif comprend de plus un échangeur air-eau 16 formant refroidisseur de l'air de suralimentation du moteur le traversant. L'entrée et la sortie dans et de l'échangeur 16 sont symbolisés respectivement par les flèches a et b. Une canalisation principale 17 est raccordée à la partie basse de la boîte à eau de sortie 13a du radiateur principal 12 et alimente en eau refroidie le moteur par l'intermédiaire d'une pompe 18. La boîte à eau de sortie 13a est séparée de l'échangeur 14 par une cloison 20a.

Selon l'invention, une conduite unique 19 est raccordée à la sortie de la culasse du moteur et débouche d'une part dans la boîte à eau d'entrée 13 du radiateur 12 en haut de celle-ci et d'autre part dans l'entrée basse 15a du serpentin 15 de l'échangeur 14, la boîte d'entrée 13 étant séparée de l'échangeur 14 par une paroi 20b. L'extrémité haute ou supérieure de sortie 15b du serpentin 15 est en communication de fluide avec l'entrée de l'échangeur air-eau 16 par l'intermédiaire d'une conduite de liaison 21. La sortie de l'échangeur air-eau 16 est raccordée à une conduite 22 dans laquelle est disposée une vanne thermostatique 23 qui reçoit une information de commande de son ouverture d'un capteur 24 déterminant la température de l'eau de la culasse du moteur. La vanne thermostatique 23 est réglée de façon à s'ouvrir lorsque la température de l'eau atteint par exemple 80°C. La conduite 22 est reliée à une boîte de dégazage 25, dont la conduite de sortie 26 est raccordée à la conduite principale 17 juste en amont de la pompe 18 de façon que l'eau circulant dans la conduite 22 soit renvoyée au moteur. La canalisation 17 comporte une vanne thermostatique 27 en amont de la pompe 18 et qui reçoit une information sur la température de l'eau en sortie de la culasse du moteur pour la commande de son ouverture au moyen d'un conduit de dérivation 29. La commande de l'ouverture de la vanne thermostatique 27 peut être effectuée par tout autre moyen tel que par exemple un capteur de température de l'eau sortant de la culasse du moteur. La vanne thermostatique 27 est réglée de façon a s'ouvrir au-dessus d'une température prédéterminée de l'eau en général supérieure à 80°C et par exemple égale à environ 85°C.

Le dispositif de refroidissement comprend également un conduit 28 raccordé d'une part à la partie supérieure de la boîte à eau 13a du radiateur 12 et d'autre part à la conduite de sortie 22 en amont de la vanne thermostatique.

Le fonctionnement du dispositif de l'invention ressort déjà de la description qui en a été faite ci-dessus et va être maintenant expliqué.

Lorsque la vanne thermostatique 27 est fermée et que la vanne thermostatique 23 s'ouvre lorsque la température de l'eau dans le moteur atteint 80°C, l'eau chaude provenant de la culasse du moteur traverse la conduite 19 et circule à la fois dans le serpentin 15 de l'échangeur 14, de bas en haut, et dans le haut du radiateur 12, dont les tubes sont déjà remplis d'eau. L'eau refroidie sortant du serpentin 15 traverse l'échangeur air-eau 16 pour refroidir l'air de suralimentation et est renvoyée à l'entrée du moteur au travers de la conduite de sortie 22, de la soupape 23, du boîtier de dégazage 25 et de la conduite de sortie 26. L'eau circulant dans le haut du radiateur 12 sort à la partie supérieure de la boîte à eau 13a et circule à travers la conduite 28 pour être renvoyée à l'entrée du moteur. La circulation de l'eau dans le haut du radiateur 12 par l'intermédiaire de la conduite 28 permet aux bulles de gaz contenues dans le radiateur, ayant tendance à se concentrer en haut de celui-ci, d'être entraînées par la circulation d'eau établie. Ceci a pour avantage d'éliminer les moyens de dégazage particuliers utilisés dans les dispositifs de refroidissement antérieurement connus.

Dans la mesure où l'eau circulant dans les tubes inférieurs du serpentin 15 de l'échangeur 14 et dans les tubes supérieurs du réservoir principal 12 a sensiblement la même température, pratiquement aucune dilatation différentielle n'est produite de sorte que la longévité du radiateur 12 est préservée.

Suivant le deuxième mode de réalisation du dispositif de l'invention représenté en figure 3, la conduite 19 est raccordée uniquement à la partie haute de la boîte à eau d'entrée 13 du radiateur 12 et l'entrée basse 15a de l'échangeur basse température 14 communique avec la partie haute de la boîte à eau de sortie 13a du radiateur 12. Ainsi, toute l'eau de l'échangeur basse température 14 passe préalablement dans le haut du radiateur 12, ce qui permet de réchauffer le haut de celui-ci quand la vanne thermostatique 23 est ouverte mais que la vanne thermostatique 27 est fermée. Ceci permet d'éviter de rajouter un dégazage du radiateur 12, le gaz contenu dans le radiateur 12 passant directement dans l'échangeur basse température 14 pour parvenir dans la boîte de dégazage 25 par l'intermédiaire de l'échangeur 16. Ce dispositif nécessite par contre de créer une perte de charge dans la sortie du radiateur 12 pour bénéficier de suffisamment de pression pour obtenir un débit suffisant dans l'échangeur basse température 14 et l'échangeur 16. Selon ce dispositif, on bénéficie de la différence de pression P2-P4, où P2 est la pression dans la boîte de sortie 13a et P4 est la pression en aval de la vanne 27, pour pousser l'eau dans l'échangeur basse température 14 alors que selon le dispositif de la figure 2, c'est la différence de pression P1-P4 qu'il faut prendre en considération pour ce même effet, P1 étant la pression dans la boîte à eau d'entrée 13 du réservoir 12. En pratique, P1-P4 ≃ 2 (P2-P4), d'où la nécessité de créer une perte de charge par un étranglement ou rétreint 30 de façon à augmenter P2-P4. La solution représentée en figure 3 conduit à une réduction du débit du radiateur 12 mais a l'avantage de la simplicité, puisque l'on supprime la durite 28 de la figure 2, et d'une meilleure irrigation de la partie haute du radiateur 12 quand la vanne 23 est ouverte et la vanne 27 fermée car la totalité du débit de l'échangeur basse température 14 passe par le haut du radiateur 12 (débit nettement supérieur au débit de dégazage de la solution représentée en figure 2), ce qui implique un gradient de température réduit et une meilleure fiabilité.

## Revendications

1. Dispositif de refroidissement de l'air de suralimentation d'un moteur à combustion interne d'un véhicule, comprenant un échangeur basse température (14) intégré au radiateur principal (12) du véhicule à la partie supérieure de celui-ci, un échangeur air-eau (16) formant refroidisseur de l'air de suralimentation alimenté en eau refroidie par l'échangeur basse température (14), une première vanne thermostatique (27) s'ouvrant à partir d'une première température prédéterminée de l'eau sortant du moteur pour alimenter celui-ci, au travers d'une canalisation principale (17) raccordée en bas de la boîte à eau de sortie (13a) du radiateur principal (12), en eau refroidie par le radiateur (12), et une conduite (19) d'amenée de l'eau provenant du moteur débouchant dans le haut de la boîte à eau d'entrée (13) du radiateur principal (12) et l'eau provenant de la conduite (19) étant envoyée à l'entrée basse (15a) de l'échangeur basse température (14), dont la sortie haute (15b) est raccordée à l'échangeur air-eau (16) par une conduite de liaison (21), la première vanne thermostatique (27) étant disposée dans la canalisation principale (17), caractérisé en ce qu'il comprend une seconde vanne thermostatique (23) s'ouvrant à une seconde température prédéterminée inférieure à la première température pour assurer la circulation d'eau de refroidissement de l'air de suralimentation à travers l'échangeur air-eau (16), en ce que la seconde vanne thermostatique (23) est disposée dans la conduite de sortie (22) de l'échangeur air-eau (16) et des moyens (28, 15a) sont prévus permettant de réchauffer les tubes du radiateur principal (12) les plus proches de l'échangeur basse température dès que ce dernier est alimenté en eau chaude de sorte que lorsque la première vanne thermostatique (27) est fermée et que la seconde vanne thermostatique (23) s'ouvre, l'eau chaude provenant de la conduite d'amenée (19) circule de bas en haut dans l'échangeur basse température (14) et dans la partie supérieure du radiateur principal (12) de façon que la partie supérieure du radiateur principal (12) soit sensiblement à la même température que l'échangeur basse température (14) et en ce que la conduite de sortie (22) de l'échangeur air-eau (16) est reliée à la conduite principale (17), en aval de la première vanne thermostatique (27) et en amont d'une pompe (18).

2. Dispositif selon la revendication 1, caractérisé en ce qu'il comprend une conduite supplémentaire de sortie 28) du radiateur principal (12) en haut de la boîte à eau de sortie (13a) de celui-ci et raccordée à la conduite de sortie (22) de l'échangeur air-eau (16) en amont de la seconde vanne thermostatique (23) de façon que les bulles de gaz contenues dans le radiateur principal (12) se concentrant en haut de celui-ci soient entraînées par la circulation d'eau lorsque la première vanne thermostatique (27) est fermée et la seconde vanne thermostatique (23) s'ouvre.

3. Dispositif selon la revendication 1, caractérisé en ce que l'entrée basse (15a) de l'échangeur basse température communique avec la partie haute de la boîte à eau de sortie (13a) du radiateur principal (12).

4. Dispositif selon la revendication 1 ou 3, caractérisé en ce que la canalisation principale (17) comporte au niveau de sa partie de raccordement au radiateur principal (12) un étranglement ou rétreint (30).

5. Dispositif selon la revendication 1, caractérisé en ce qu'il comprend une boîte de dégazage (25) reliée à la conduite de sortie (22) de l'échangeur air-eau (16) en aval de la seconde vanne thermostatique (23) et dont la sortie est raccordée à la canalisation principale (17) en aval de la première vanne thermostatique (27).

6. Dispositif selon l'une des revendications précédentes, caractérisé en ce que la première température précitée est supérieure à 80°C, et est par exemple égale à environ 85°C tandis que la seconde température précitée est inférieure d'au moins 5°C à la première température et est par exemple égale à environ 80°C.

7. Dispositif selon l'une des revendications précédentes, caractérisé en ce que la seconde vanne thermostatique (23) est commandée à partir de l'information de température d'eau dans le moteur.

## Claims

1. Device for cooling the air for supercharging an internal combustion engine of a vehicle, comprising a low temperature exchanger (14) integrated into the main radiator (12) of the vehicle at the upper part thereof, and air-water exchanger (16) forming a cooler for the supercharging air and fed with cooled water by the low temperature exchanger (14), a first thermostatic valve (27) opening from a first predetermined temperature of the water issuing from the engine to feed the latter through a main pipeline (17) connected to the bottom of the outlet water box (13a) of the main radiator (12), with water cooled by the radiator (12) and a pipeline (19) for supplying the water issuing from the engine opening into the top of the inlet water box (13) of the main radiator (12) and the water issuing from the pipeline (19) being conveyed to the lower inlet (15a) of the low temperature exchanger (14) the upper outlet (15b) of which is connected to the air-water exchanger (16) by a connecting duct (21), the first thermostatic valve (27) being arranged in the main pipeline (17), characterized in that it comprises a second thermostatic valve (23) opening at a second predetermined temperature lower than the first temperature to ensure the circulation of water for cooling the supercharging air through the air-water exchanger (16), in that the second thermostatic valve (23) is arranged in the outlet duct (22) of the air-water exchanger (16) and means (28, 15a) are provided permitting to reheat the tubes of the main radiator (12) nearest to the low temperature exchanger as soon as the latter is fed with hot water so that when the first thermostatic valve (27) is closed and the second thermostatic valve (23) opens, the hot water issuing from the supply duct (19) circulates from bottom to top in the low temperature exchanger (14) and in the upper portion of the main radiator (12), so that the upper portion of the main radiator (12) be substantially at the same temperature as the low temperature exchanger (14) and in that the outlet duct (22) of the air-water exchanger (16) is connected to the main pipeline (17) downstream of the first thermostatic valve (27) and upstream of a pump (18).

2. Device according to claim, 1 characterized in that it comprises an additional outlet duct (28) of the main radiator (12) at the top of the outlet water box (13a) thereof and connected to the outlet duct (22) of the air-water exchanger (16) upstream of the second thermostatic valve (23) so that the gas bubbles contained in the main radiator (12) concentrating at of the top of the later be carried along by the water circulation when the first thermostatic valve (27) is closed and the second thermostatic valve (23) opens.

3. Device according to claim 1, characterized in that the bottom inlet (15a) of the low temperature exchanger communicates with the upper portion of the outlet water box (13a) of the main radiator (12).

4. Device according to claim 1 or 3, characterized in that the main pipeline (17) comprises at the level of its portion of connection to the main radiator (12) throttling or restriction (30).

5. Device according to claim 1, characterized in that it comprises a degassing box (25) connected to the outlet duct (22) of the air-water exchanger (16) downstream of the second thermostatic valve (23) and the outlet of which is connected to the main pipeline (17) downstream of the first thermostatic valve (27).

6. Device according to one of the foregoing claims, characterized in that the first aforesaid temperature is higher than 80°C and is for example equal to about 85°C whereas the second aforesaid temperature is lower by at least 5°C than the first temperature and is for example equal to about 80°C.

7. Device according to one of the foregoing claims, characterized in that the second thermostatic valve (23) is controlled from the water temperature information in the engine.

## Patentansprüche

1. Vorrichtung zur Kühlung der Aufladeluft eines Verbrennungsmotors eines Fahrzeuges, mit einem in dem Hauptkühler (12) des Fahrzeuges an dessen oberen Teil eingegliederten Tauscher (14) niedriger Temperatur, einem einen Aufladeluftkühler bildenden mit durch den Tauscher (14) niedriger Temperatur gespeisten Luft-Wasser-Tauscher (16), einem ersten thermostatischen Ventil (27), das sich ab einer vorbestimmten ersten Temperatur des aus dem Motor fliessenden Wassers öffnet, um diesen durch eine am unteren Teil des Ausgangswasserkastens (13a) des Hauptkühlers (12) mit durch den Kühler (12) gekühlten Wasser zu speisen und einer in den oberen Teil des Eingangswasserkastens (13) des Hauptkühlers (12) einmündenden Leitung (19) zur Zufuhr des aus dem Motor kommenden Wassers und wobei das aus der Leitung (19) kommende Wasser zu dem unteren Eingang (15a) des Tauschers niedriger Temperatur (14) geführt wird, dessen oberer Ausgang (15b) an den Luft-Wasser-Tauscher (16) durch eine Verbindungsleitung (21) angeschlossen ist , wobei das erste thermostatische Ventil (27) in der Hauptleitung (17) angeordnet ist, dadurch gekennzeichnet, dass sie ein zweites thermostatisches Ventil (23) aufweist, das sich bei einer vorbestimmten zweiten Temperatur öffnet, die niedriger als die erste Temperatur ist, um den Umlauf des Wassers zur Kühlung der Aufladeluft durch den Luft-Wasser-Tauscher (16) zu gewährleisten, dass das zweite thermostatische Ventil (23) in der Ausgangsleitung (22) des Luft-Wasser-Tauschers (16) angeordnet ist und Mittel (28, 15a) vorgesehen sind, um das Erwärmen derjenigen Rohre des Hauptkühlers (12) zu ermöglichen die am Nahesten von dem Tauscher niedriger Temperatur sind, sobald dieser letztere mit Heisswasser gespeist wird, sodass, wenn das erste thermostatische Ventil (27) geschlossen ist und das zweite thermostatische Ventil (23) sich öffnet, das aus der Zufuhrleitung (19) kommende Heisswasser in dem Tauscher niedriger Temperatur (14) und in dem oberen Teil des Hauptkühlers (12) von Unten nach oben fliesst, damit der obere Teil des Hauptkühlers (12) etwa dieselbe Temperatur wie der Tauscher niedriger Temperatur (14) hat und dass die Ausgangsleitung (22) des Luft-Wasser-Tauschers (16) mit der Hauptleitung (17) stromabwärts des ersten thermostatischen Ventils (27) und stromaufwärts einer Pumpe (18) verbunden ist.

2. Vorrichtung nach Anspruch 1, dadurch gekennzeichnet, dass sie eine zusätzliche Ausgangsleitung (28) aus dem Hauptkühler (12) am oberen Teil des Ausgangswasserkastens (13a) desselben aufweist, die an die Ausgangsleitung (22) des Luft-Wasser-Tauschers (16) stromaufwärts des zweiten thermostatischen Ventils (23) angeschlossen ist, damit die in dem Hauptkühler (12) im oberen Teil desselben sich konzentrierenden Gasbläschen durch den Wasserumlauf mitgenommen werden, wenn das erste thermostatische Ventil (27) geschlossen ist und das zweite thermostatische Ventil (23) sich öffnet.

3. Vorrichtung nach Anspruch 1, dadurch gekennzeichnet, dass der untere Eingang (15a) des Tauschers niedriger Temperatur mit dem oberen Teil des Ausgangswasserkastens (13a) des Hauptkühlers (12) in Verbindung steht.

4. Vorrichtung nach Anspruch 1 oder 3, dadurch gekennzeichnet, dass die Hauptleitung (17) eine Drosselung bzw. Einschnürung (30) im Bereich ihres sich an den Hauptkühler (12) anschliessenden Teiles aufweist.

5. Vorrichtung nach Anspruch 1, dadurch gekennzeichnet, dass sie einen mit der Ausgangsleitung (22) des Luft-Wasser-Tauschers (16) stromabwärts des zweiten thermostatischen Ventils (23) verbundenen Entgasungskasten (25) aufweist, dessen Ausgang an die Hauptleitung (17) stromaufwärts des ersten thermostatischen Ventils (27) angeschlossen ist.

6. Vorrichtung nach einem der vorangehenden Ansprüche, dadurch gekennzeichnet, dass die vorgenannte erste Temperatur höher als 80°C ist und z.B. gleich ungefähr 85°C ist, während die vorgenannte zweite Temperatur um wenigstens 5°C niedriger als die erste Temperatur ist und z.B gleich ungefähr 80°C ist.

7. Vorrichtung nach einem der vorangehenden Ansprüche, dadurch gekennzeichnet, dass das zweite thermostatische Ventil (23) durch die Daten der Wassertemperatur in dem Motor gesteuert wird.
